# EUROPEAN PATENT APPLICATION

(11) **EP 2 348 402 A1**
(43) Date of publication of application: **27.07.2011**
(21) Application number: 10191565.0
(22) Date of filing: 17.11.2010
(51) Int. Cl.: G06F 9/44, G06F 3/06, H04N 1/00

(54) **Image forming apparatus and method for providing local user interface thereof**

(30) Priority: 16.12.2009 KR 20090125558
(71) Applicant: SAMSUNG ELECTRONICS CO., LTD., Suwon-si, Gyeonggi-do (KR)
(72) Inventor: Kim, Hyun-seok, Gyeonggi-do (KR)
(74) Representative: Hewett, Jonathan Michael Richard

(57) **Abstract**

A method for providing a local user interface of an image forming apparatus is provided. The method includes supplying power to the image forming apparatus, requesting at least one of a first template and first variable data which make up a home screen of the local user interface, creating the home screen corresponding to the at least one of the first template and the first variable data, and displaying the created home screen on the local user interface.

## Description

The present invention relates to an image forming apparatus and a method for providing a local user interface thereof, and more particularly, to an image forming apparatus which creates and converts a user interface (UI) screen using a template and dynamic data, and a method for providing a local user interface thereof.

Image forming apparatuses perform the operations of creating, printing, receiving, and transmitting image data. Representative examples of an image forming apparatus include a printer, a scanner, a copier, a facsimile machine, and a multifunction peripheral incorporating the functions of the aforementioned devices in a single device.

Recently, an image forming apparatus providing a UI screen as a web page is available due to advances in web technologies. A web server included in the image forming apparatus creates a UI screen as a web page, and displays the UI screen using a web browser. In order to display a UI screen using a web browser, the image forming apparatus should download, analyze, and execute contents which make up the UI screen.

In a personal computer (PC)-based environment which shows good performance of a network and a processor, a screen converting speed does not become slow even if a UI screen is displayed using a web browser. However, in an image forming apparatus-based environment, a UI screen converting speed is slow when a UI screen is displayed using a web browser.

Accordingly, embodiments of the present invention provide an image forming apparatus which converts a UI screen using an already registered template and a method for providing a local user interface thereof.

The foregoing and/or other aspects are achieved by providing a method for providing a user interface of an image forming apparatus, the method including:
supplying power to the image forming apparatus, requesting at least one of a first template and first variable data which define a home screen of the user interface, creating the home screen corresponding to the at least one of the first template and the first variable data, and displaying the created home screen on the user interface.

The method may further include, if a job function is selected on the user interface, changing the home screen to a function screen corresponding to the selected job function, and the function screen may be made up of at least one of a second template and second variable data.

The operation of supplying the power may be one of operations of switching on the image forming apparatus and converting the image forming apparatus from a power saving mode into a ready mode.

The method may further include, if the at least one host apparatus has access to the user interface, providing the home screen which is made up of the first template and the first variable data to the at least one home apparatus.

The first template may be editable.

The method may further include converting a pre-stored template of a file type into a template of an interpreted data type and registering the converted template.

The operation of creating the home screen may include: selecting a template of a web page for the home screen, and combining the selected template and variable data corresponding to the selected template to create the web page for the home screen.

The first template may include a layout, an image, and a text which are fixed according to the creation of the home screen, and the first variable data may include a layout, an image, and a text which change according to the creation of the home screen.

The first template and the first variable data may be configured by at least one of a markup language, cascading style sheets (CSS), and Javascript.

The template of interpreted data type may include a layout tree, a Javascript runtime, and a decoded image.

The foregoing and/or other aspects are achieved by providing an image forming apparatus including: a power supply unit which supplies power to the image forming apparatus, a controller which requests at least one of a first template and first variable data which make up a home screen of the user interface, and creates the home screen corresponding to the at least one of the first template and the first variable data, and a display unit which displays the created home screen on the user interface.

If a job function is selected on the user interface, the controller may control the display unit to change the home screen to a function screen corresponding to the selected job function, and the function screen may be made up of at least one of a second template and second variable data.

The power supply unit may be operated in at least one of cases where the image forming apparatus is switched on and where the image forming apparatus is switched from a power saving mode into a ready mode.

If the at least one host apparatus has access to the user interface, the controller may control the home screen, which is made up of the first template and the first variable data, to be provided to the at least one host apparatus.

The controller may convert a pre-stored template of a file type into a template of an interpreted data type and register the converted template.

The controller may select a template of a web page for the home screen, and combine the selected template and dynamic data corresponding to the selected template to create the web page for the home screen.

The first template may include a layout, an image and a text which are fixed according to the creation of the home screen, and the first variable data may include a layout, an image, and a text which change according to the creation of the home screen.

The foregoing and/or other aspects are achieved by providing a method for providing a user interface of an image forming, the method including: requesting at least one of a first template and first variable data which make up a home screen of the user interface, creating the home screen corresponding to at least one of the first template and the first variable data, displaying the created home screen on the user interface, determining if a job function is selected on the user interface; and converting the home screen into a function screen including at least one of a second template and second variable data if determined that the job function is selected.

The method may further include, if the at least one host apparatus has access to the user interface, providing the function screen which is made up of the second template and the second variable data to the at least one host apparatus.

The converting operation may select a template of a web page for the function screen, combine the second template and the second variable data corresponding to the second template to create the web page for the function screen, and convert the home screen into the function screen.

The above and/or other aspects will become more apparent by describing in detail the exemplary embodiments, with reference to the accompanying drawings in which:
FIG. 1 is a block diagram illustrating an image forming apparatus according to an exemplary embodiment;
FIGS. 2A and 2B are block diagrams illustrating the image forming apparatus of FIG. 1 in detail;
FIGS. 3A and 3B are diagrams to explain an operation of the embodiments;
FIGS. 4A and 4B are views to explain a template according to an exemplary embodiment;
FIG. 5 is a view illustrating an example of an operation of registering a template;
FIG. 6 is a view illustrating an example of an operation of creating a UI screen using a template;
FIG. 7 is a view to explain an operation of combining a template and dynamic data;
FIG. 8 is a view illustrating a configuration of a converted template in detail;
FIG. 9 is a view illustrating an example of a template according to an exemplary embodiment;
FIG. 10 is a flowchart illustrating a method for converting a screen of an image forming apparatus according to an exemplary embodiment; and
FIGS. 11 and 12 are flowcharts illustrating a method for providing a local user interface of an image forming apparatus according to another exemplary embodiment.

Reference will now be made in detail to embodiments of the present invention, examples of which are illustrated in the accompanying drawings, wherein like reference numerals refer to the like elements throughout.

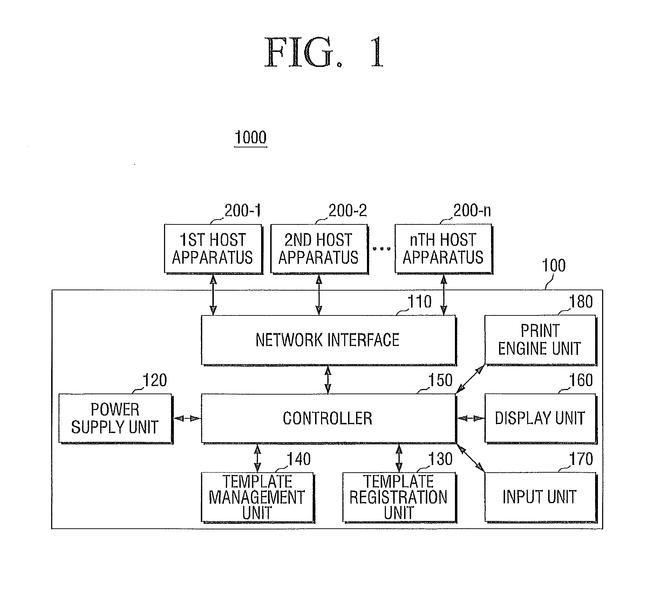

FIG. 1 is a block diagram illustrating an image forming system 1000 according to an exemplary embodiment. Referring to FIG. 1, the image forming system 1000 includes an image forming apparatus 100 and at least one host apparatus 200-1, 200-2, ..., 200-n.

The image forming apparatus 100 may be realized as various types of apparatuses such as a scanner, a copier, a facsimile machine, a printer, and a multifunction peripheral. The image forming apparatus 100 may display a web page to make up a screen using a web browser.

The at least one host apparatus 200-1, 200-2, ..., 200-n may be a mobile apparatus equipped with an engine which can transmit diverse commands to the image forming apparatus 100 at a remote distance. This mobile apparatus may be a mobile phone, a personal digital assistant (PDA), or a portable multimedia player (PMP).

The image forming apparatus 100 may include a network interface 110, a power supply unit 120, a template registration unit 130, a template management unit 140, a controller 150, a display unit 160, an input unit 170, and a print engine unit 180.

The network interface 110 exchanges data with the at least one host apparatus 200-1, 200-2, ..., 200-n.

The power supply unit 120 supplies power to the image forming apparatus 100. The power supply unit 120 determines whether an event to create a UI screen occurs or not according to whether a power switch is turned on or not or whether the image forming apparatus 100 is switched from a power saving mode to a ready mode or not. The power supply unit 120 may be a determination unit 520 which will be described below.

The template registration unit 130 registers a template. A pre-stored template of a file type is converted into a template of an interpreted data type and the converted template is registered by the template registration unit 130.

The template management unit 140 requests at least one of a first template and first variable data which make up a home screen of a local user interface. Furthermore, the template management unit 140 creates a home screen corresponding to at least one of the first template and the first variable data. The variable data recited herein refers to dynamic data and the home screen refers to a screen which makes up a UI screen of the image forming apparatus 100.

The template management unit 140 converts a pre-stored template of a file type into a template of an interpreted data type. In this case, the template registration unit 130 registers the converted template of a data type.

The controller 150 controls the overall operation of the image forming apparatus 100. More specifically, the controller 150 controls the network interface 110, the template registration unit 130, the template management unit 140, and the display unit 160 to perform related operations.

The controller 150 controls the template management unit 140 to request at least one of the first template and the first variable data which make up the home screen of the local user interface, and to create a home screen corresponding to the at least one of the first template and the first variable data.

More specifically, the controller 150 may select a template of a web page to make up a home screen and combine the selected template and variable data corresponding to the selected template, thereby creating a web page for a home screen.

Also, if the at least one host apparatus 200-1, 200-2, ..., 200-n has access to the local user interface, the controller 150 may control the network interface 100 to provide the home screen, which is made up of the first template and the first variable data, to the at least one host apparatus 200-1, 200-2, ..., 200-n.

Accordingly, since the UI screen that can be rapidly converted into another screen on the image forming apparatus 100 is displayed on the at least one host apparatus 200-1, 200-2, ..., 200-n in the same way, a user's convenience is improved.

Furthermore, the controller 150 may perform a user authentication using an ID and a password which are received for the at least one host apparatus 200-1, 200-2,..., 200-n from the network interface 110. In this case, diverse authentication methods, which are well known in the related art, may be applied.

The display unit 160 displays the created web page. More specifically, the display unit 160 displays the created home screen on the local user interface.

If a job function is selected from the local user interface displayed on the display unit 160, the controller 150 controls the display unit 160 to change the home screen into a function screen which is made up of at least one of a second template and second variable data.

More specifically, if a main screen of the UI screen of the image forming apparatus 100 includes diverse icons such as a copy icon, a scan icon, a fax icon, and a setting icon, the main screen of the display unit 160 is changed to a function screen representing each function, such as copy, scan, and fax, according to a selection of a user. The changed function screen is made up of at least one of the second template and the second variable data. Accordingly, the UI screen conversion can be rapidly performed on the image forming apparatus 100.

The input unit 170 receives a user command to perform diverse functions through an operating panel or a touch screen on the display unit 160.

The print engine unit 180 performs a printing operation according to a command from a user.

The web browser may be Microsoft Internet Explorer (MSIE), Firefox, Opera, Chrome, Safari, Maemo, Android, or LiMo. The web page may be realized by a web-based language such as HyperText Markup Language (HTML), Extensible Markup Language (XML), JavaServer Pages (JSP), Active Server Pages (ASP), Hypertext Preprocessor (PHP), Flex, or JavaFX.

According to an exemplary embodiment, the image forming apparatus 100 creates a UI screen on the display unit 160 using a template and variable data according to an event which occurs in the power supply unit 120. Accordingly, screen conversion is performed rapidly.

According to another exemplary embodiment, the image forming apparatus 100 creates a UI screen using a template and variable data under control of the controller 150, and then transmits the UI screen to at least one host apparatus 200-1, 200-2, ..., 200-n connected to the image forming apparatus 100. Accordingly, since the UI screen that can be rapidly converted into another screen is created in the image forming apparatus 100 and is also displayed on the host apparatus 200-1, 200-2,..., 200-n, the user's convenience is improved.

In this case, the UI screen created by the image forming apparatus 100 can be normally displayed on the host apparatus 200-1, 200-2,..., 200-n even if the web browser is different between the image forming apparatus 100 and the host apparatus 200-1, 200-2, ..., 200-n, for example, if the image forming apparatus 100 uses an internet explorer and the host apparatus 200-1, 200-2, ..., 200-n uses a Firefox.

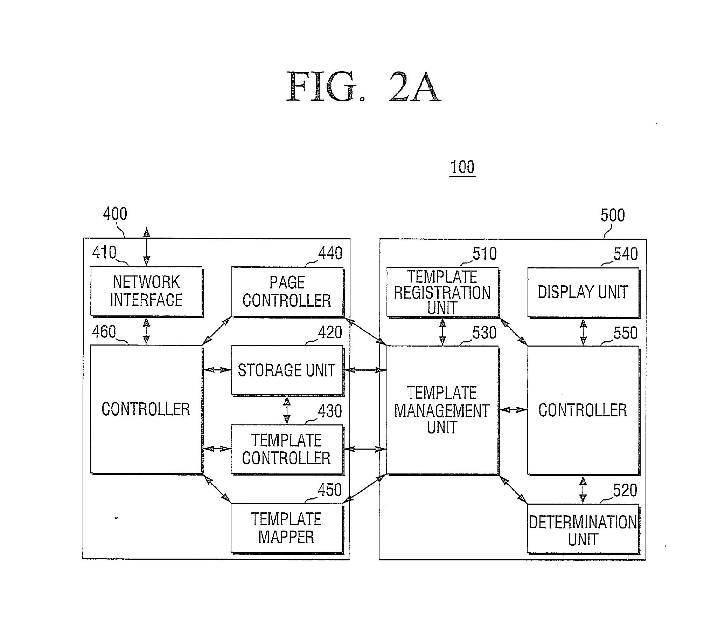

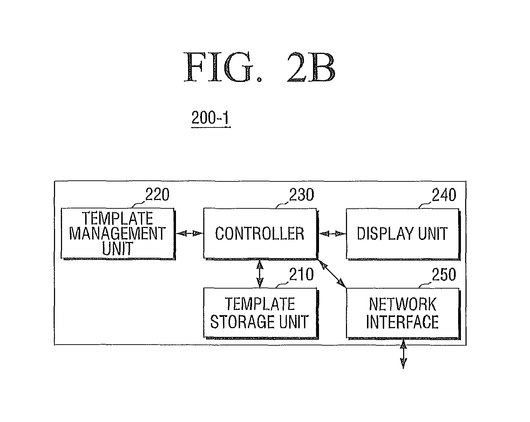

FIGS. 2A and 2B are block diagrams illustrating the image forming system 100of FIG. 1 in detail.

Referring to FIG. 2A, the image forming apparatus 100 includes a server 400 and a UI display apparatus 500.

The server 400 stores at least one template of a file type and provides a list of templates. The server 400 is included in the image forming apparatus 100 and has a unique IP address to communicate with at least one of the host apparatuses 200-1, 200-2,..., 200-n.

The UI display apparatus 500 converts the stored template of the file type into a template of interpreted data type and registers the converted template. If an event to convert a UI screen occurs, the UI display apparatus 500 selects a template of a web page for a resulting UI screen from registered templates, and combines the selected template and dynamic data corresponding to the selected template, thereby creating a web page for the resulting UI screen, and displays the web page.

The template recited herein refers to a fixed part of a web page which makes up a UI screen of the image forming apparatus 100. The entire UI screen may be made up of one template or a plurality of templates. The template includes a layout, an image, and text which do not change even if the UI screen is created or converted, and may be configured by at least one of a markup language, cascading style sheets (CSS), and Javascript.

The first and the second templates can be edited, for example, using a dedicated utility or application.

The variable data recited herein indicates a changeable part of a web page for a UI screen of the image forming apparatus 100, and may be expressed by diverse terms, such as dynamic data or dynamic HTML. The dynamic data includes a layout, an image, and text which change if a UI screen is created or converted, and may be configured by at least one of a markup language, cascading style sheets (CSS), and Javascript.

The server 400 the UI display apparatus 500 may include connecting units (not shown), respectively, and may be connected to each other in a wired manner through the connecting units. However, the server 400 and the UI display apparatus 500 may be connected to each other in a wireless manner.

The server 400 includes a network interface 410, a storage unit 420, a template controller 430, a page controller 440, a template mapper 450, and a controller 460.

The network interface 410 may be realized as a network interface card (NIC) and exchanges data with at least one of the host apparatuses 200-1, 200-2,..., 200-n.

The storage unit 420 stores at least one template. The template stored in the storage unit 420 may be of a file type, for example, may have a file extension JSP.

The storage unit 420 may classify the template into "template A" and "template B" according to identification information, or classify the template into "/web/a.jsp" and "/web/b.jsp" according to address information, for example, a uniform resource locator (URL) indicating where each template is stored, and store the classified template.

The storage unit 420 stores templates provided by the manufacturer of the image forming apparatus 100. Also, the storage unit 420 may store diverse types of templates using a memory device such as a universal serial bus (USB).

The template controller 430 manages the template stored in the server 400 and provides a template to the UI display apparatus 500 in response to a request. More specifically, the template controller 430 provides a pre-stored template to the UI display apparatus 500 when the image forming apparatus 100 is booted, and provides template-related information to the UI display apparatus 500 if a template is added during the operation of the image forming apparatus 100.

Furthermore, if the UI display apparatus 500 requests a list of templates which are loaded from the storage unit 420 with different identification information, the template controller 430 provides the list of templates in response to this request.

The page controller 440 stores dynamic data. Furthermore, the page controller 440 creates contents to make up a web page using dynamic data and provides the contents to the UI display apparatus 500.

The template mapper 450 identifies a web page to make up a resulting screen and a type of a corresponding template if an event to convert a UI screen occurs in the UI display apparatus 500, and notifies the UI display apparatus 500 of the identified type of template.

The controller 460 controls the overall operation of the server 400. The image forming apparatus 100 may operate the respective elements 410, 420, 430, 440, 450 systematically without requiring control of the controller 460.

The UI display apparatus 500 includes a template registration unit 510, the determination unit 520, a template management unit 530, a display unit 540, and a controller 550.

The template registration unit 510 registers a template. More specifically, if the template management unit 530 converts a template of the file type into a template of the interpreted data type, the template registration unit 510 registers the converted template. In this case, the template of the interpreted data type includes a layout tree, Javascript runtime, and a decoded image, which will be described in detail below.

The determination unit 520 determines whether an event to convert a UI screen occurs or not. If a command to convert a screen is input by a user, the determination unit 520 determines that a pre-set event occurs.

The template management unit 530 requests the template controller 230 to transmit a loaded template using identification information of the list provided by the template controller 430, and converts the requested template of the file type into a template of the interpreted data type.

Also, if the determination unit 520 determines that an event occurs, the template management unit 530 selects a template of a web page for a resulting UI screen from templates registered by the template registration unit 510, and combines the selected template and dynamic data corresponding to the selected template, thereby creating a web page to create or convert a UI screen.

The display unit 540 displays the web page. In this case, the UI display apparatus 500 may display the web page using a web browser.

Also, the display unit 540 may receive a user command through a touch screen or through a key on an operating panel. The determination unit 520 determines an occurrence of an event according to a user command.

The controller 550 controls the overall operation of the UI display apparatus 500. The image forming apparatus 100 may operate the respective elements 510, 520, 530, 540 systematically without requiring control of the controller 550.

The controller 460 and the controller 550 may be disposed outside the server 400 and the UI display apparatus 500 as separate elements.

FIG. 2B is a block diagram illustrating a host apparatus according to an exemplary embodiment. Referring to FIG. 2B, one 200-1 of the host apparatuses 200-1, 200-2,..., 200-n includes a template storage unit 210, a template management unit 220, a controller 230, a display unit 240, and a network interface 250.

The template storage unit 210 stores a template received from the image forming apparatus 100.

The template management unit 220 may convert the template and dynamic data received from the image forming apparatus 100 to have a format which can be displayed on the display unit 240.

The controller 230 controls the overall operation of the host apparatus 200-1. More specifically, the controller 230 controls the template storage unit 210, the template management unit 220, the display unit 240, and the network interface 250.

The display unit 240 configures a UI screen using data which is converted by the template management unit 220. The display unit 240 may be realized on a web browser. Even if the web browser is different between the display unit 240 and the display unit 160, the display unit 240 can display the UI screen.

The network interface 250 communicates with the network interface 110 of the image forming apparatus 100 to exchange data.

Accordingly, since the UI screen created by the image forming apparatus 100 can be displayed on the external host apparatus 200-1, 200-2, ..., 200-n, the user's convenience is improved.

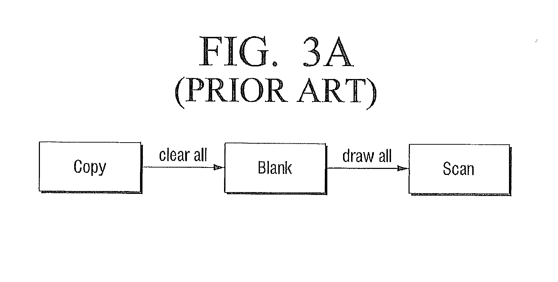

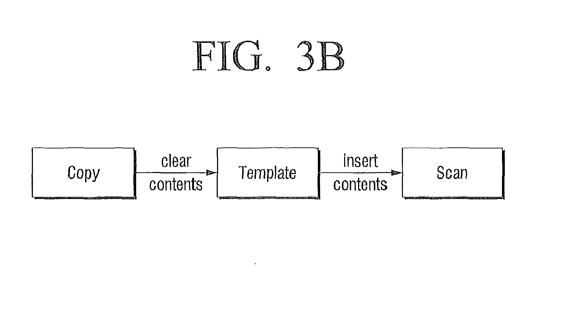

FIGS. 3Aand 3B are view to explain an operation of the general UI screen and present embodiments by way of an example. In these figures, a web page making up a UI screen includes a square box and a text "Copy" in the square box and the UI screen is to be converted to change "Copy" in the square box to "Scan".

According to a general UI screen converting method in FIG. 3A, a UI screen is converted in a manner that both the square box and the text "Copy" are deleted ("Blank") and then the text "Scan" is inserted.

However, this method requires a long time to convert the UI screen using a web browser. According to a UI screen converting method according to an exemplary embodiment shown in FIG. 3B, a UI screen is converted in a manner that the square box, which is not required to be changed, remains as it is and the text "Copy" is deleted and then the text "Scan" is inserted.

This example is merely to describe the operation of the embodiments, and the square box may be a template and the texts "Copy" and "Scan" may be dynamic data.

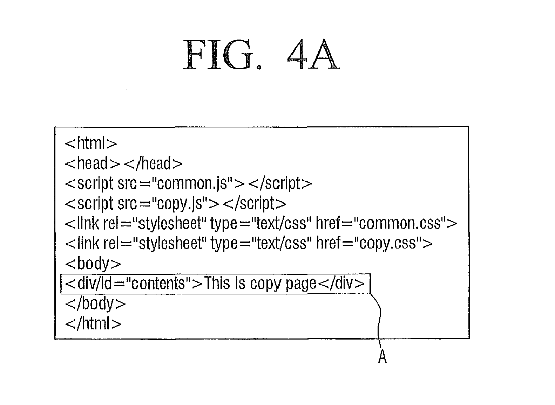

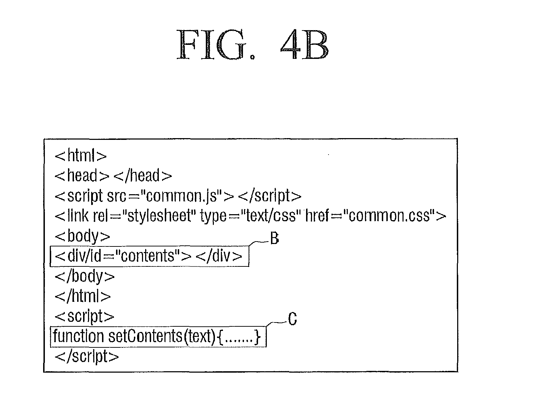

FIGS. 4A and 4B are views to explain a template according to an exemplary embodiment.

Referring to FIG. 4A, a source code for indicating a web page for a general UI screen is illustrated. FIG. 4B illustrates an example of a source code to explain a template according to an exemplary embodiment. In FIG. 4A, the portion marked "A" displays contents of a web page for a UI screen. However, in FIG. 4B, the portion marked "B" is blank. In the portion marked "C" of FIG. 4B, diverse types of contents to be filled in the blank are defined in a function form.

In this case, the contents may be dynamic data, and, referring to FIG. 4B, the dynamic data may change according to a function called from the "C" portion.

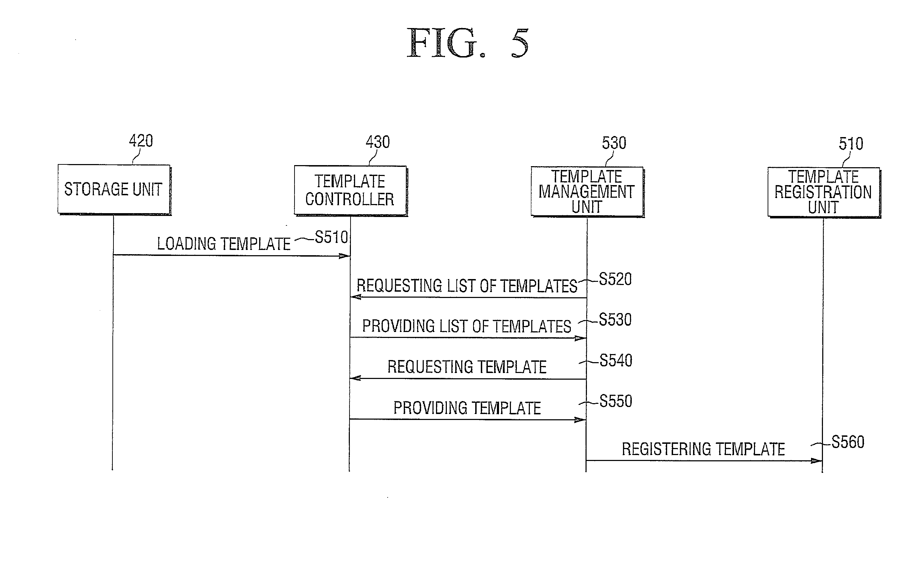

FIG. 5 is a view illustrating an example of an operation of registering a template according to an embodiment. Referring to FIG. 5, if the image forming apparatus 100 is turned on, the storage unit 420 loads a pre-stored template to the template controller 230 (S510). More specifically, the storage unit 420 loads (registers) a template which is classified according to identification information (ID) and address information (URL) to the template controller 230 (S510).

If the template management unit 530 of the UI display apparatus 500 requests the template controller 430 to provide a list of templates (S520), the template controller 430 provides the list of templates to the template management unit 530 (S530).

Since the template management unit 530 performs the above-described operation if the image forming apparatus 100 is turned on or switches from a power saving mode to a ready mode, operation S510 and operation S520 may be performed simultaneously.

The template management unit 530 requests the template controller 430 to provide a template based on the identification information (ID) and the address information (URL) included in the list of templates (S540).

The template controller 430 provides the template to the template management unit 530 (S550).

Since the template received at the template management unit 530 is of a file type, the template management unit 530 converts the template of the file type into a template of interpreted data type such as a layout tree, a Java script runtime, and a decoded image.

The template management unit 530 registers the template of the interpreted data type at the template registration unit 510 (S560).

Accordingly, the UI display apparatus 500 registers (stores) the template of interpreted data type rather than registering (storing) the template in a file form. Therefore, if a request to convert a UI screen is received, the UI screen can be rapidly converted using the template of interpreted data type.

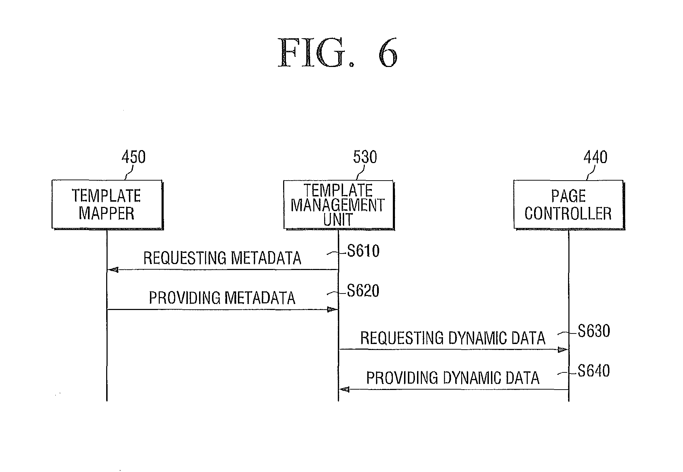

FIG. 6 is a view illustrating an example of an operation of creating a UI screen using a template according to an exemplary embodiment. In FIG. 6, it is assumed that a template which is converted by the operation of FIG. 5 is already registered at the template registration unit 420.

If the determination unit 420 determines that an event to convert a UI screen occurs, the template management unit 530 requests the template mapper 450 to provide information regarding a template, that is, metadata (S610).

The template mapper 450 provides information regarding a template, that is, metadata to the template management unit 530 in consideration of a web page for a resulting UI screen (S620).

The template management unit 530 selects one of templates stored in the template registration unit 510.

The template management unit 530 requests the page controller 540 to provide dynamic data (S630). The dynamic data and the template may not be matched with each other according to the type of template. Thus, the template management unit 530 requests the page controller 440 to provide dynamic data matched with the selected template (S630).

The page controller 440 provides the dynamic data to the template management unit 530 (S640).

The template management unit 530 combines the dynamic data with the selected template, thereby creating a web page for a resulting UI screen. The display unit 540 displays the created web page.

Accordingly, since a resulting UI screen can be rapidly created using a fixed template which is already prepared and dynamic data which is changeable contents, user's convenience is improved.

Operations illustrated in FIGS. 5 and 6 are explained with reference to the image forming apparatus 100 of FIG. 2. However, the operations may be applied to the image forming apparatus 100 of FIG. 1.

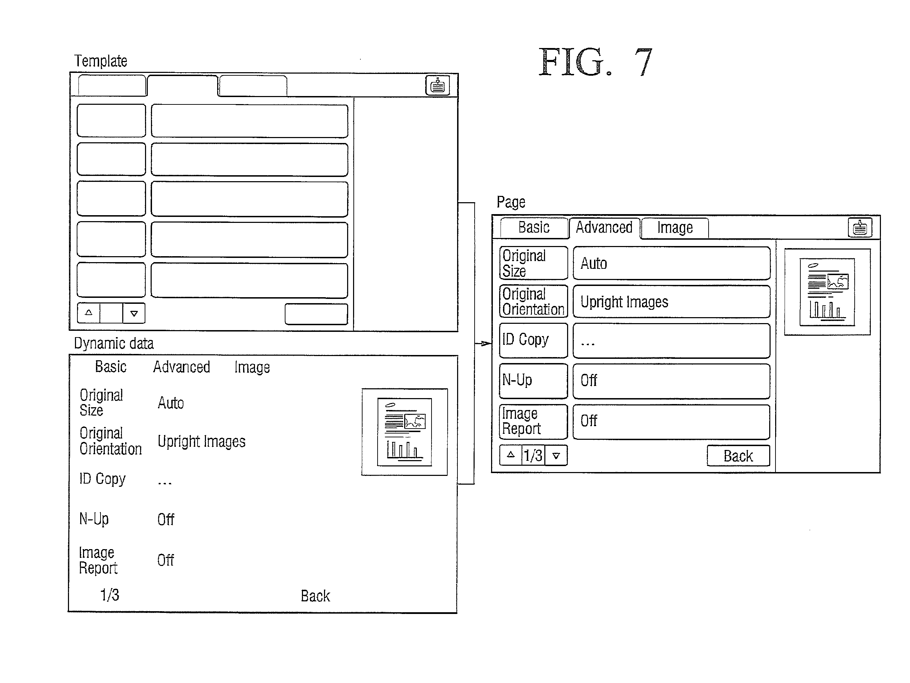

FIG. 7 is a view illustrating an operation of combining a template and dynamic data in detail. In FIG. 7, a template which is a fixed part of a web page displayed on a UI screen and dynamic data which is changeable are illustrated.

A web page for a UI screen may be created by combining the template and the dynamic data.

Even if a user selects one of a Basic tab item, an Advanced tab item, and an Image tab item on the web page for the UI screen, a layout, that is, a frame structure does not change. That is, according to an embodiment, an original template is used as it is and only dynamic data is replaced with another when a web page, that is, a UI screen is converted. Therefore, the UI screen can be rapidly converted.

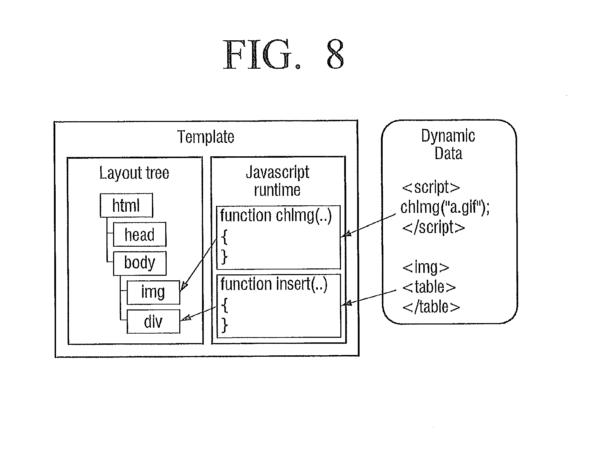

FIG. 8 is a view illustrating a converted template in detail. Referring to FIG. 8, a template of the file type is converted into a template of the interpreted data type by the template management unit 530 of the UI display apparatus 500.

The layout tree is made for a web browser to display a screen. The layout tree is made by combining a document object model (DOM) tree, which expresses a mark up language-based document such as HTML and XML in a tree form, and a CSS tree which expresses a presentation module in a tree form. In general, a web browser receives HTML and CSS, changes the HTML and CSS to a DOM tree and a CSS tree, respectively, and then combines the HTML and CSS to create a layout tree, and downloads a necessary image and displays the image on a UI screen.

If the layout tree performs an operation of displaying a UI screen, the Javascript runtime performs a specific function displayed on the UI screen. For example, if a user selects a specific button on the UI screen to output a certain message on the screen, the Javascript runtime performs a process regarding an event of pressing the screen, that is, a process of outputting a message on the screen. Like the layout tree, the Javascript runtime is created by the web browser receiving a Javascript code and then converting the code.

In FIG. 8, a layout tree is illustrated and an image file (a.gif) and a table are inserted into the layout tree as dynamic data. In this case, the Javascript runtime to perform a function regarding the operation of the UI screen may insert the image and the table through a function call.

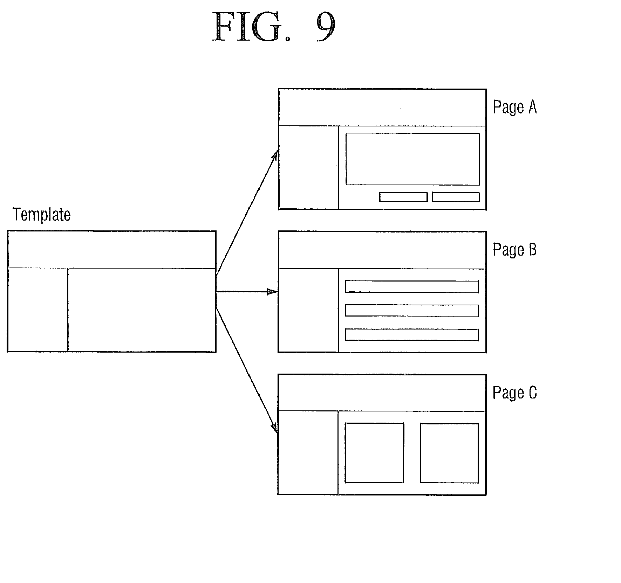

FIG. 9 is a view illustrating an example of a template according to an exemplary embodiment. Referring to FIG. 9, one template is used to create a plurality of web pages for diverse types of UI screens.

The dynamic data may also have diverse types of layouts, "Page A", "Page B", and "Page C", as illustrated in FIG. 9.

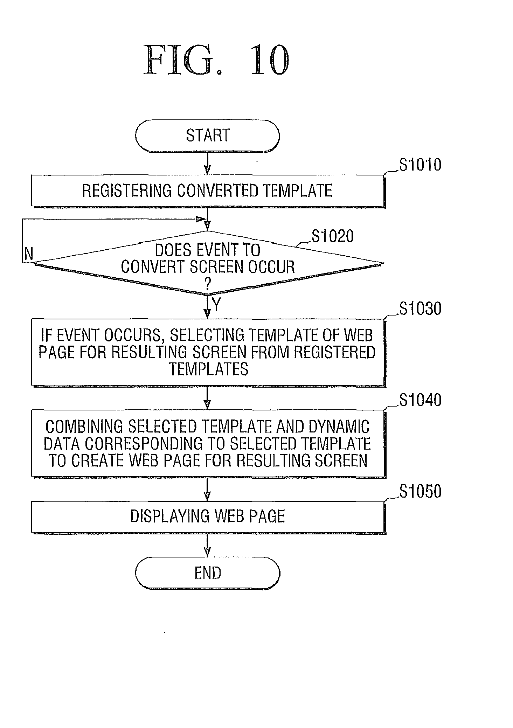

FIG. 10 is a flowchart illustrating a method for converting a screen of an image forming apparatus according to an exemplary embodiment. Referring to FIG. 10, a pre-stored template of the file type is converted into a template of the interpreted data type and the converted template is registered (S1010).

It is determined whether an event to convert a UI screen occurs or not (S1020). If an event occurs (S1020-Y), a template of a web page for a resulting UI screen is selected from registered templates (S1030).

The web page for the resulting UI screen is created by combining the selected template and dynamic data corresponding to the selected template (S1040).

The created web page is displayed (S1050).

Since the UI screen can be rapidly converted, user's convenience is improved.

In the displaying operation, the created web page may be displayed using a web browser.

The template includes a layout, an image, and text which do not change when a UI screen is converted, and the dynamic data includes a layout, an image, and text which change when a UI screen is converted.

The template and the dynamic data may be configured by at least one of a markup language, CSS, and Javascript.

The template of interpreted data type may include a layout tree, a Javascript runtime, and a decoded image.

The registering operation (S1010) may load at least one pre-stored template having different identification information, request a list of loaded templates, provide the list of loaded templates in response to the request, request a loaded template using identification information of the list, convert the template of file type into a template of interpreted data type, and register the converted template.

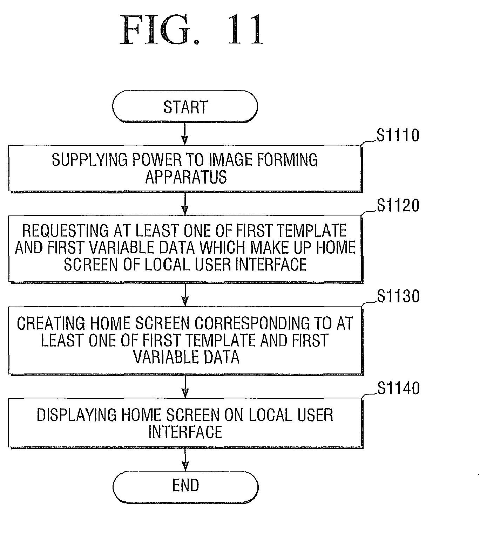

FIG. 11 is a flowchart illustrating a method for providing a local user interface of an image forming apparatus according to an exemplary embodiment.

Referring to FIG. 11, the image forming apparatus 100 is supplied with power (S1110).

At least one of a first template and first variable data which make up a home screen of a local user interface is requested (S1120).

A home screen corresponding to the at least one of the first template and the first variable data is created (S1130).

The home screen is displayed on the local user interface (S1140).

Also, if a job function is selected on the local user interface, the home screen is converted into a function screen, which is made up of at least one of a second template and second variable data.

If at least one host apparatus 200-1, 200-2, ..., 200-n has access to the local user interface, the home screen made up of the first template and the first variable data is provided to the at least one host apparatus 200-1, 200-2, ..., 200-n.

Before or after operation S1110, a pre-stored template of the file type may be converted into a template of the interpreted data type and the converted template may be registered.

Also, in operation S1130, a template of a web page for a resulting UI screen is selected, and the selected template is combined with dynamic data corresponding to the selected template so that a web page of a resulting UI screen is created.

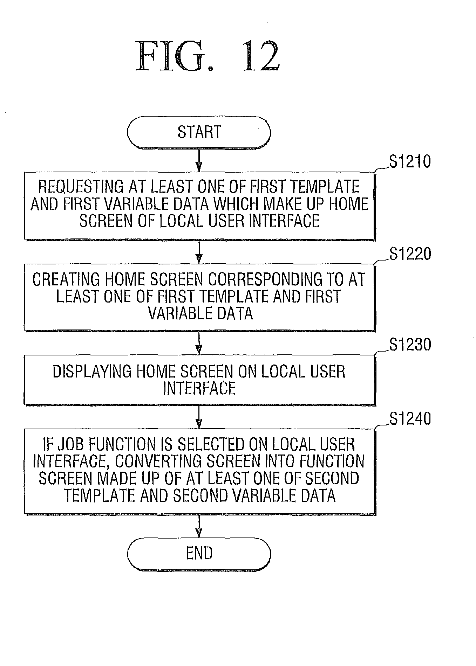

FIG. 12 is a flowchart illustrating a method for providing a local user interface according to another exemplary embodiment. Referring to FIG. 12, at least one of a first template and first variable data which make up a home screen of a local user interface is requested (S1210), and a home screen corresponding to the at least one of the first template and the first variable data is created (S1220).

The created home screen is displayed on the local user interface (S1230).

If a job function is selected on the local user interface, the home screen is converted into a function screen which is made up of at least one of a second template and second variable data (S1240).

Also, if at least one host apparatus 200-1, 200-2,..., 200-n has access to the local user interface, the function screen made up of the second template and the second variable data is provided to the at least one host apparatus 200-1, 200-2, ...., 200-n. The converting operation S1240 selects a template of a web page for a resulting function screen and combines the second template and the second variable data corresponding to the second template, thereby creating a web page for the resulting function screen and converting the screen into the function screen.

Although a few example embodiments have been shown and described, the present disclosure is not limited to the described example embodiments. Instead, it would be appreciated by those skilled in the art that changes may be made to these example embodiments without departing from the principles of the invention, the scope of which is defined by the claims.

## Claims

1. A method for providing a user interface of an image forming apparatus which has a browser and a user interface and is connected to at least one host apparatus having a browser, the method comprising:
requesting at least one of a first template and first variable data which make up a home screen of the user interface;
creating the home screen corresponding to the at least one of the first template and the first variable data; and
displaying the created home screen on the user interface.

2. The method as claimed in claim 1, further comprising selecting a job function on the user interface; and
changing the home screen to a function screen corresponding to the selected job function,
wherein the function screen comprises at least one of a second template and second variable data.

3. The method as claimed in claim 1 or claim 2, further comprising supplying power comprising at least one of switching on the image forming apparatus, converting the image forming apparatus from a power saving mode into a ready mode and combinations thereof.

4. The method as claimed in any one of the preceding claims, further comprising, if the at least one host apparatus has access to the user interface, providing the home screen to the at least one host apparatus.

5. The method as claimed in any one of the preceding claims, further comprising editing the first template.

6. The method as claimed in any one of the preceding claims, further comprising converting a pre-stored template of a file type into an interpreted template of data type and registering the converted template,
wherein the interpreted template of data type comprises a layout tree, a Javascript runtime, and a decoded image

7. The method as claimed in any one of the preceding claims, wherein creating the home screen comprises:
selecting a template of a page for the home screen; and
creating the page for the home screen comprising combining the selected template and variable data corresponding to the selected template to create the page for the home screen.

8. The method as claimed in any one of the preceding claims, wherein the first template comprises a layout, an image, and a text, and the first variable data comprises a layout, an image, and a text, the method further comprising:
fixing the layout, the image and the text of the first template according to the creating of the home screen; and
changing the layout, the image and the text of the first variable data according to the creating of the home screen.

9. The method according to any one of the preceding claims, further comprising configuring the first template and the first variable data by at least one of a markup language, cascading style sheets, and Javascript.

10. An image forming apparatus which has a browser and a user interface and is connected to at least one host apparatus having a browser, the image forming apparatus comprising:
a controller arranged to request at least one of a first template and first variable data which make up a home screen of the user interface, and to create the home screen corresponding to the at least one of the first template and the first variable data; and
a display unit arranged to display the created home screen on the user interface.

11. The image forming apparatus as claimed in claim 10, wherein, if a job function is selected on the user interface, the controller controls the display unit to change the home screen to a function screen corresponding to the selected job function, and the function screen comprises at least one of a second template and second variable data.

12. The image forming apparatus as claimed in claim 10 or claim 11, further comprising a power supply unit configured to switch on the image forming apparatus, to switch the image apparatus from a power saving mode into a ready mode, and combinations thereof.

13. The image forming apparatus as claimed in any one of claims 10 to 12, wherein, if the at least one host apparatus has access to the user interface, the controller is arranged to control the home screen to be provided to the at least one host apparatus.

14. The image forming apparatus as claimed in any one of claims 10 to 13, wherein the controller is arranged to convert a pre-stored template of a file type into an interpreted template of data type and to register the converted template.

15. The image forming apparatus as claimed in any one of claims 10 to 14, wherein the controller is arranged to select a template of a page for the home screen, and to combine the selected template and dynamic data corresponding to the selected template to create the page for the home screen.
